# EUROPÄISCHE PATENTSCHRIFT

(11) **EP 1 676 403 B1**
(45) Veröffentlichungstag und Bekanntmachung des Hinweises auf die Patenterteilung: **12.12.2012**
(21) Anmeldenummer: 03819019.5
(22) Anmeldetag: 24.10.2003
(51) Int. Cl.: H04L 12/403, H04L 29/12, G06F 13/40, G06F 12/06

(54) **VERFAHREN ZUR SERIELLEN VERGABE VON ADRESSEN UND ZUR ÜBERPRÜFUNG DER ADRESSVERGABE IN EINEM BUSSYSTEM**
METHOD FOR SERIAL ALLOCATION OF ADDRESSES AND MONITORING THE ADDRESS ALLOCATION IN A BUS SYSTEM
PROCEDE D'ATTRIBUTION D'ADRESSES EN SERIE ET DE CONTROLE DE L'ATTRIBUTION D'ADRESSES DANS UN SYSTEME DE BUS

(43) Veröffentlichungstag der Anmeldung: 05.07.2006
(73) Patentinhaber: ELMOS Semiconductor AG, 44227 Dortmund (DE); Johnson Electric Switzerland AG, 3280 Murten (CH)
(72) Erfinder: STEGER, Roland, 71093 Weil im Schönbuch (DE); BOURQUI, Bernard, CH-1784 Courtepin (CH)
(74) Vertreter: AMMANN PATENTANWÄLTE AG BERN
(86) Internationale Anmeldenummer: PCT/EP2003/011836
(87) Internationale Veröffentlichungsnummer: WO 2005/050924

(56) Entgegenhaltungen:
- WO-A-01/07974
- WO-A-94/16382
- US-A- 4 773 005
- US-A1- 2002 096 573

## Beschreibung

Die Erfindung betrifft ein Verfahren zur seriellen Vergabe von Adressen und zur Überprüfung der Adressvergabe in einem Bussystem, wobei das Bussystem einen Bus aufweist, an den eine Steuereinheit und mehrere zu adressierenden Teilnehmer angeschlossen sind.

Derartige serielle Bussysteme finden in einer Vielzahl von Vorrichtungen Anwendung. Ein Anwendungsbeispiel bezieht sich auf Kraftfahrzeuge und dort auf einzelne Komponenten, wie beispielsweise die Klimaanlage. Die verschiedenen Stellmotore für Misch- und Luftverteilklappen sowie für die Heiz- und Kühlaggregate und die diversen Sensoren einer derartigen Klimaanlage sind über einen Bus miteinander verschaltet. Um die einzelnen Aktuatoren einer derartigen Klimaanlage ansprechen zu können, wird diesen Aktuatoren (allgemein Teilnehmer des Bussystems) jeweils eine Adresse zugeordnet. Diese Adresse kann fest einprogrammiert sein oder aber von der zentralen Steuereinheit des Bussystems vergeben werden, was beispielsweise beim Starten des Fahrzeuges erfolgen kann.

Serielle Adressvergabeverfahren sind beispielsweise in DE-C-40 38 992, DE-C-44 04 962, DE-A-44 28 502, DE-A-196 47 668, DE-A-197 56 564, EP-A-0 843 260, EP-A-0 854 609, EP-A-0 855 817 und WO 97/45983 beschrieben.

Des weiteren ist in DE-A-101 47 512 ebenfalls ein serielles Adressvergabeverfahren beschrieben. Ferner sind Adressvergabeverfahren in den vorangemeldeten, jedoch noch nicht veröffentlichten Patentanmeldungen DE 102 56 631 und PCT/EP03/03302 beschrieben.

Sämtlichen dieser bekannten bzw. bereits vorgeschlagenen seriellen Adressvergabeverfahren ist gemeinsam, dass einer der Anzahl an Teilnehmern gleichende Anzahl an einzelnen Adressvergabezyklen durchgeführt werden, in denen jeweils einer der Teilnehmer adressiert wird. Dabei erfolgt bei korrektem Ablauf des Adressvergabeverfahrens die Adressierung insofern seriell, als die Teilnehmer beginnend mit dem elektrisch am weitesten von der Steuereinheit entfernt an dem Bus angeschlossenen Teilnehmer oder mit dem am nächsten zur Steuereinheit an den Bus angeschlossenen Teilnehmer begonnen wird und die Teilnehmer davon ausgehend in der Reihenfolge, in der sie elektrisch an den Bus angeschlossen sind, adressiert werden.

Problematisch ist bei dieser Art der (automatischen) Adressvergabe der Umstand, dass Fehler auftreten können. Diese Fehler haben ihre Ursache in zeitweise fehlerhaften Pegeln in den Teilnehmern bzw. auf dem Bus und in Kontaktierungs- und Verbindungsproblemen in der Busleitung. Bei den bekannten Verfahren ist es lediglich möglich, den Umstand zu erkennen, dass ein Fehler aufgetreten ist. Der Fehler kann allerdings nicht lokalisiert werden.

Aus der US-A-4 773 005 ist ein weiteres Verfahren zur Vergabe von Adressen an mehrere an einen gemeinsamen Bus gekoppelten Peripheriegeräte bekannt. Dieses Verfahren sieht keine Überprüfung der Adressvergabe vor.

Eine Aufgabe der Erfindung ist es, ein Verfahren zur seriellen Vergabe von Adressen zu schaffen, bei dem die Möglichkeiten einer Fehlerortung gegeben sind.

Zur Lösung dieser Aufgabe wird mit der Erfindung ein Verfahren zur seriellen Vergabe von Adressen und zur Überprüfung der Adressvergabe in einem Bussystem, das einen Bus aufweist, an den eine Steuereinheit und mehrere zu adressierende Teilnehmer angeschlossen sind, vorgeschlagen, wobei bei dem Verfahren,
- die Steuereinheit innerhalb jeweils eines Adressvergabezyklus einem zu adressierenden Teilnehmer eine Adresse zuordnet, wobei die Steuereinheit zu Beginn eines jeden Adressvergabezyklus ein Startsignal ausgibt,
- jeder noch zu adressierende Teilnehmer bis zu seiner Adressierung die Anzahl an empfangenen Startsignalen erfasst und innerhalb desjenigen Adressvergabezyklus, in dem ihm von der Steuereinheit eine Adresse zugeordnet wird, einen der Anzahl an bis dahin empfangenen Startsignalen entsprechenden Zahlenwert speichert, und
- die Steuereinheit nach Adressierung des letzten noch nicht adressierten Teilnehmers oder nach Ablauf einer der Anzahl von Teilnehmern gleichenden Anzahl von Adressvergabezyklen die gespeicherten Zählerwerte der adressierten Teilnehmer abfragt und anhand dieser Abfrage die Adressvergabe auf ihre Plausibilität hin überprüft.

Sinngemäß besteht die Erfindung darin, dass jeder zu adressierende Teilnehmer die Anzahl der Adressvergabezyklen zählt, die bis zu seiner Adressierung durchgeführt worden sind. Der in einem Adressvergabezyklus identifizierte Teilnehmer speichert dann seinen Zählerwert nebst der ihm zugeordneten Adresse ab. Die Steuereinheit kann dann beispielsweise nach Abschluss des letzten Adressvergabezyklus durch Abfrage der Zählerstände jedes adressierten Teilnehmers die Adressvergabe auf ihre Plausibilität hin untersuchen. Weist beispielsweise keiner der Teilnehmer einen einem zuvor durchgeführten Adressvergabezyklus entsprechenden Zählerwert auf oder zwei Teilnehmer ein und den gleichen Zählerwert auf, so kann daraus geschlossen werden, dass bei der Adressvergabe ein Fehler unterlaufen ist. Ebenso liegt beispielsweise ein Fehler vor, wenn einer der Teilnehmer noch seinen Anfangszählerwert aufweist. Hingegen ist die Adressvergabe dann plausibel, wenn sämtliche Teilnehmer gespeicherte (Adressvergabezyklus-)Zählerwerte aufweist, die sämtlichen durchgeführten Adressvergabezyklen entsprechen. Sind also beispielsweise an einem Bus 16 Teilnehmer angeschlossen und existiert jeder Zählerwert zwischen 1 und 16 als gespeicherter Wert jeweils einmal für sämtliche Teilnehmer, so ist die Adressvergabe planmäßig erfolgt.

Im Falle eines bei der Plausibilitätsüberprüfung erkannten Fehlers kann die Adressvergabe für sämtliche adressierten Teilnehmer oder lediglich für jeweils denjenigen Teilnehmer durchgeführt werden, bei dem ein Fehler erkannt worden ist. Gerade die zuletzt genannte Möglichkeit wird durch das erfindungsgemäße Verfahren geschaffen, wobei durch wiederholtes Auftreten desselben Fehlers der Schluss gefolgert werden kann, worauf (beispielsweise Busunterbrechung oder Kontaktprobleme) der Fehler bei der Adressvergabe zurückzuführen ist.

Bei der bisherigen Beschreibung der erfindungsgemäßen Überprüfung der Adressvergabe auf Plausibilität ist der Fall angesprochen worden, dass die Adressvergabe zunächst für sämtliche Teilnehmer erfolgt und die Überprüfung dann vorgenommen wird. Alternativ dazu ist es nach der Erfindung aber auch möglich, dass die Steuereinheit während eines Adressvergabezyklus überprüft, ob der Zählerwert des in diesem Adressvergabezyklus zu adressierenden Teilnehmers der Anzahl bisher durchgeführter Adressvergabezyklen entspricht und ein Fehlersignal ausgibt, wenn dies nicht der Fall ist. Weist also der im ersten Adressvergabezyklus adressierte Teilnehmer einen gespeicherten Zählerwert von 1 auf (was durch die Steuereinheit nach Vergabe der Adresse abgefragt werden kann), so ist der erste Adressvergabezyklus korrekt verlaufen. Ist dagegen der Zählerwert des im zweiten Adressvergabezyklus adressierten Teilnehmers ebenfalls 1, so liegt ein Fehler vor, und zwar insoweit, als der im zweiten Adressvergabezyklus identifizierte Teilnehmer den ersten Adressvergabezyklus nicht mitgezählt hat, was wiederum auf eine kurzzeitige Busunterbrechung o.dgl. zurückzuführen ist. Hier kann dann konkret die Fehlersuche einsetzen.

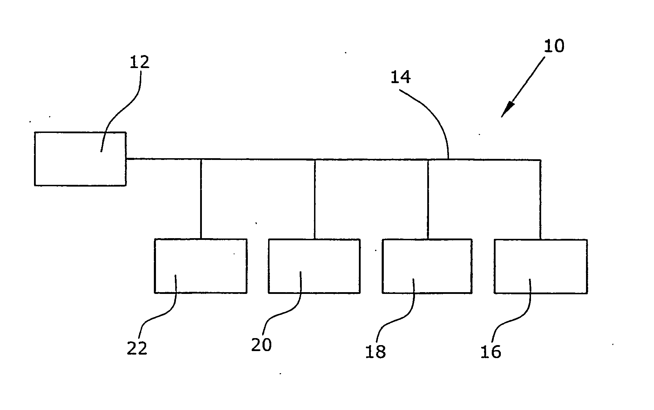

Die Erfindung wird nachfolgend unter Bezugnahme auf die Zeichnung, in der ein Bussystem mit vier Teilnehmern dargestellt ist, näher erläutert.

Wie in der Zeichnung dargestellt, weist das Bussystem 10 eine Steuereinheit 12 auf, von der aus sich eine Busleitung 14 erstreckt. Längs der Busleitung sind vier Teilnehmer 16,18,20,22 angeschlossen. Jeder Busteilnehmer weist einen Zähler auf, der die Anzahl an durchgeführten Adressvergabezyklen bis zu dem Zeitpunkt zählt, zu dem der betreffende Teilnehmer identifiziert und adressiert wird.

Zu Beginn der Adressvergabe sendet die Steuereinheit 12 beispielsweise ein Signal zum Setzen der Zählerwerte sämtlicher Teilnehmer auf einen Anfangszählerwert aus. Dieses Setzen der Zählerwerte kann aber beispielsweise auch durch das jedem Teilnehmer zugeleitete Signal des Einschaltens des Gesamtsystems erfolgen.

Während des ersten Adressvergabezyklus wird nun einer der Busteilnehmer identifiziert und adressiert. Für dieses Ausführungsbeispiel sei angenommen, dass im ersten Adressvergabezyklus der elektrisch am weitesten von der Steuereinheit 12 entfernt angeordnete Busteilnehmer 16 adressiert wird. In diesem Zusammenhang sei auf die eingangs genannten Schriften verwiesen, aus denen sich ergibt, dass durch die serielle Adressvergabe pro Zyklus exakt ein Teilnehmer identifizierbar ist. Dadurch, dass dieser Teilnehmer nach seiner Adressierung nicht mehr an der weiteren Adressvergabe teilnimmt, wird im nächsten Adressvergabezyklus wieder exakt ein (anderer) Teilnehmer identifiziert und adressiert. Dieses Prozedere beginnt entweder mit dem elektrisch am weitesten von der Steuereinheit 12 entfernt oder am nächsten zur Steuereinheit 12 angeordneten Teilnehmer.

Auf das hier zu beschreibende Ausführungsbeispiel bezogen, weist der gespeicherte Zählerwert des Teilnehmers 16 nun einen Wert auf, der dem Umstand entspricht, dass der erste Adressvergabezyklus durchgeführt worden ist. Im einfachsten Fall wird hier als Zählerwert eine 1 abgespeichert. Man könnte sich aber auch andere Inkremente wie beispielsweise 2 oder 10 vorstellen. Dem Busteilnehmer 16 wird dann eine Adresse zugeordnet (beispielsweise Adresse 10).

Während des zweiten Adressvergabezyklus wird nun wiederum der elektrisch am weitesten von der Steuereinheit 12 angeordnete noch nicht adressierte Teilnehmer 18 identifiziert. Der Zählerwert dieses Teilnehmers 18 beträgt 2 und es sei angenommen, dass ihm die Adresse 16 zugeordnet wird.

Im dritten Adressvergabezyklus wird dem Teilnehmer 20 beispielsweise die Adresse 17 zugeordnet, wobei sein Zählerwert 3 ist. Schließlich wird im vierten

Adressvergabezyklus dem Teilnehmer 22 beispielsweise die Adresse 18 zugeordnet; sein Zählerwert beträgt 4.

Die in der zuvor genannten Abfolge durchgeführte Adressvergabe ist ordnungsgemäß. Dies kann durch Abfrage der Zählerstände der über ihre Adressen ansprechbaren Teilnehmer 16-22 verifiziert werden, indem die Teilnehmer jeden Zählerstand zwischen 1 und 4 gespeichert haben. Ein weiteres Kriterium für eine ordnungsgemäß erfolgte Adressvergabe kann sein, dass für aufsteigende gespeicherte Zählerwerte aufsteigende Adressen vergeben werden. Alternativ dazu könnte man auch für aufsteigende gespeicherte Zählerwerte abfallende Adressen vergeben.

Nachfolgend soll nun ein Beispiel angegeben werden, bei dem während der Adressvergabe ein Fehler erfolgt ist. Hier sei z.B. angenommen, dass während des ersten Adressvergabezyklus die Busleitung zwischen den Teilnehmer 16 und 18 unterbrochen ist. Als am weitesten von der Steuereinheit 12 elektrisch an die Busleitung 14 angeschlossener Teilnehmer wird dann im ersten Adressvergabezyklus der Teilnehmer 18 identifiziert. Sein gespeicherter Zählerstand beträgt 1 und ihm wird die Adresse 10 zugeordnet. Während des zweiten Adressvergabezyklus sei angenommen, dass die kurzzeitige Busleitungsunterbrechung zwischen den Teilnehmern 16 und 18 wieder aufgehoben ist. Im zweiten Adressvergabezyklus wird also als am weitesten von der Steuereinheit 12 elektrisch angeordneter noch nicht adressierter Teilnehmer der Teilnehmer 16 identifiziert. Sein Zählerwert beträgt ebenfalls 1, da dieser Teilnehmer 16 während der ersten Adressvergabe das Startsignal für den Beginn des ersten Adressvergabezyklus wegen der Busleitungsunterbrechung nicht hat empfangen können. Dem Teilnehmer 16 wird nun die Adresse 16 zugeordnet.

Während der nächsten zwei Adressvergabezyklen werden dann, wie oben beschrieben, die Teilnehmer 20 und 22 adressiert. Deren gespeicherte Zählerwerte betragen 3 bzw. 4; ihnen werden die Adressen 17 bzw. 18 zugeordnet. Bei der nun erfolgenden Überprüfung der Adressvergabe auf Plausibilität wird erkannt, dass die Busteilnehmer 16 und 18 jeweils einen gespeicherten Zählerwert von 1 aufweisen. Dies wird als Fehler erkannt. Überdies fehlt ein Teilnehmer mit dem gespeicherten Zählerwert 2. Auch dies kann als Fehlerindiz dienen.

Die zuvor beschriebene erst nach Abschluss sämtlicher Adressvergabezyklen durchgeführte Überprüfung kann auch in jedem Adressvergabezyklus erfolgen. Bei dem zuvor beschriebenen zweiten (fehlerhaften) Beispiel würde also bereits nach Abschluss des zweiten Adressvergabezyklus feststehen, dass ein Fehler aufgetaucht ist, da nach Abschluss des zweiten Adressvergabezyklus zu erwarten ist, dass der Zählerstand des adressierten Busteilnehmers 16 2 beträgt. Da dies nicht der Fall ist, muss also ein Fehler vorliegen.

Eine weitere Fehlermöglichkeit könnte darin bestehen, dass ein Teilnehmer oder eine Gruppe von Teilnehmern dauerhaft keine elektrische Verbindung zum Bus bzw. zur Steuereinheit aufweist. Für das in der Zeichnung dargestellte Bussystem sei beispielsweise angenommen, dass die Verbindung des Busteilnehmers 16 zur Busleitung 14 defekt ist. Die Steuereinheit 12 führt vier Adressvergabezyklen durch, wobei die drei elektrisch mit der Busleitung 14 verbundenen Teilnehmer 18-22 bereits nach Abschluss des dritten Adressvergabezyklus adressiert sind. Im vierten Adressvergabezyklus würde sich also kein Teilnehmer mehr adressieren lassen. Dies kann als Fehler erkannt werden.

## Patentansprüche

1. Verfahren zur seriellen Vergabe von Adressen
in einem Bussystem, das einen Bus aufweist, an den eine Steuereinheit und mehrere zu adressierende Teilnehmer angeschlossen sind, wobei bei dem Verfahren,
- die Steuereinheit (12) innerhalb jeweils eines Adressvergabezyklus einem zu adressierenden Teilnehmer (16-22) eine Adresse zuordnet, wobei die Steuereinheit (12) zu Beginn eines jeden Adressvergabezyklus ein Startsignal ausgibt, und
- jeder noch zu adressierende Teilnehmer (16-22) bis zu seiner Adressierung die Anzahl an empfangenen Startsignalen erfasst und innerhalb desjenigen Adressvergabezyklus, in dem ihm von der Steuereinheit (12) eine Adresse zugeordnet wird, einen der Anzahl an bis dahin empfangenen Startsignalen entsprechenden Zahlenwert speichert,
daduch gekennzeichnet, dass zur Überprüfung der Adressvergabe im Bussystem die Steuereinheit (12) nach Adressierung des letzten noch nicht adressierten Teilnehmers (16-22) oder nach Ablauf einer der Anzahl von Teilnehmern (16-22) gleichenden Anzahl von Adressvergabezyklen die gespeicherten Zählerwerte der adressierten Teilnehmer (16-22) abfragt und anhand dieser Abfrage die Adressvergabe auf ihre Plausibilität hin überprüft.

2. Verfahren nach Anspruch 1, **dadurch gekennzeichnet, dass** die Adressvergabe dann plausibel ist, wenn sämtliche Teilnehmer (16-22) gespeicherte Zählerwerte aufweisen, die sämtlichen durchgeführten Adressvergabezyklen entsprechen.

3. Verfahren nach Anspruch 1 oder 2, **dadurch gekennzeichnet, dass** die Steuereinheit (12) ein Fehlersignal ausgibt, wenn
- einer der Teilnehmer (16-22) einen Zählerwert aufweist, der gleich dem Anfangszählerwert ist, oder
- keiner der Teilnehmer (16-22) einen Zählerwert aufweist, der einem der durchgeführten Adressvergabezyklen entspricht, oder
- mindestens zwei der Teilnehmer (16-22) den gleichen Zählerwert aufweisen.

4. Verfahren nach einem der Ansprüche 1 bis 3, **dadurch gekennzeichnet, dass** im Falle eines bei der Plausibilitätsüberprüfung erkannten Fehlers die Adressvergabe für sämtliche adressierten Teilnehmer oder lediglich für jeweils denjenigen Teilnehmer, bei dem ein Fehler erkannt worden ist, durchgeführt wird.

5. Verfahren zur seriellen Vergabe von Adressen
in einem Bussystem, das einen Bus aufweist, an den eine Steuereinheit und mehrere zu adressierende Teilnehmer angeschlossen sind, wobei bei dem Verfahren,
- die Steuereinheit (12) innerhalb jeweils eines Adressvergabezyklus einem zu adressierenden Teilnehmer (16-22) eine Adresse zuordnet, wobei die Steuereinheit (12) zu Beginn eines jeden Adressvergabezyklus ein Startsignal ausgibt, und
- jeder noch zu adressierende Teilnehmer (16-22) bis zu seiner Adressierung die Anzahl an empfangenen Startsignalen erfasst und innerhalb desjenigen Adressvergabezyklus, in dem ihm von der Steuereinheit (12) eine Adresse zugeordnet wird, einen der Anzahl an bis dahin empfangenen Startsignalen entsprechenden Zahlenwert speichert,
daduch gekennzeichnet, dass zur Überprüfung der Adressvergabe im Bussystem
die Steuereinheit (12) während eines Adressvergabezyklus überprüft, ob der Zählerwert des in diesem Adressvergabezyklus zu adressierenden Teilnehmers (16-22) der Anzahl der bisher durchgeführten Adressvergabezyklen entspricht, und ein Fehlersignal ausgibt, wenn dies nicht der Fall ist.

6. Verfahren nach einem der Ansprüche 1 bis 5, **dadurch gekennzeichnet, dass** die Steuereinheit (12) den aufeinanderfolgend an den Bus angeschlossenen Teilnehmern (16-22) ansteigende oder abfallende Werte repräsentierende Adressen zuordnet.

7. Verfahren nach einem der Ansprüche 1 bis 6, **dadurch gekennzeichnet, dass** die Steuereinheit den Teilnehmern beginnend mit dem von der Steuereinheit aus betrachtet am weitesten entfernt oder am nächsten an den Bus angeschlossenen Teilnehmer die Adressen zuordnet.

## Claims

1. Method for the serial allocation of addresses in a bus system, comprising a bus, which a control unit and several users to be addressed are connected to, wherein in the method
- the control unit (12) assigns an address to a user (16-22) to be addressed in each address allocation cycle, wherein the control unit (12) emits a start signal at the beginning of each address allocation cycle, and
- each user (16-22) still to be addressed records the number of received start signals up to the addressing thereof and records, during the address allocation cycle in which the user receives an address from the control unit (12), a number value corresponding to the number of start signals received so far, **characterized in that**, for checking the address allocation in the bus system, the control unit (12) requests the number values stored by the addressed users (16-22) after addressing the last of the users (16-22) not yet addressed or after finishing a number of address allocation cycles corresponding to the number of users (16-22) and checks the plausibility of the address allocation by means of the request.

2. Method according to claim 1, **characterized in that** the address allocation is plausible if every user (16-22) has number values stored which corresponds to all address allocation cycles performed.

3. Method according to claim 1 or 2, **characterized in that** the control unit (12) emits an error signal, if
- one of the users (16-22) has a number value which is equal to the initial number value, or
- none of the users (16-22) has a number value which corresponds to one of the address allocation cycles performed, or
- at least two users (16-22) have the same number value.

4. Method according to one of the claims 1 to 3, **characterized in that** in case of an error detected during the plausibility verification the address allocation is performed for all users addressed or only for the respective user for which an error has been detected.

5. Method for the serial allocation of addresses in a bus system, comprising a bus, which a control unit and several users to be addressed are connected to, wherein in the method
- the control unit (12) assigns an address to a user (16-22) to be addressed in each address allocation cycle, wherein the control unit (12) emits a start signal at the beginning of each address allocation cycle, and
- each user (16-22) still to be addressed records the number of received start signals up to the addressing thereof and records, during the address allocation cycle in which the user receives an address from the control unit (12), a number value corresponding to the number of start signals received so far, **characterized in that**, for checking the address allocation in the bus system, the control unit (12) checks during an address allocation cycle, whether the number value of the user (16-22) to be addressed in this address allocation cycle corresponds to the number of the address allocation cycles performed so far and emits an error signal, when this is not the case.

6. Method according to one of the claims 1 to 5, **characterized in that** the control unit (12) assigns addresses representing increasing or decreasing values to the users (16-22) connected successively to the bus.

7. Method according to one of the claims 1 to 6, **characterized in that** the control unit assigns addresses to the users starting with the user which, seen from the control unit, is connected to the bus the farthest or the nearest.

## Revendications

1. Procédé d'attribution d'adresses en série dans un système de bus présentant un bus auquel une unité de commande et plusieurs abonnés à adresser sont connectés, procédé dans lequel
- l'unité de commande (12) assigne une adresse à un abonné (16-22) à adresser dans un cycle d'attribution d'adresses respectif, où l'unité de commande (12) émet un signal de départ au début de chaque cycle d'attribution d'adresses, et
- chaque abonné (16-22) restant encore à adresser détecte le nombre de signaux de départ reçus jusqu'à son adressage et enregistre, dans le cycle d'attribution d'adresses au cours duquel une adresse lui est assignée par l'unité de commande (12), une valeur numérique correspondant au nombre de signaux de départ reçus jusque-là, **caractérisé en ce que**, pour vérifier l'attribution d'adresses dans le système de bus, l'unité de commande (12) demande les valeurs numériques enregistrées par les abonnés adressés (16-22) après l'adressage du dernier abonné (16-22) pas encore adressé ou à la fin d'un nombre de cycles d'attribution d'adresses qui est égal au nombre d'abonnés (16-22), et vérifie la vraisemblance de l'attribution d'adresses sur la base de cette demande.

2. Procédé selon la revendication 1, **caractérisé en ce que** l'attribution d'adresses est vraisemblable si tous les abonnés comportent des valeurs numériques enregistrées qui correspondent à tous les cycles d'attribution d'adresses exécutés.

3. Procédé selon la revendication 1 ou 2, **caractérisé en ce que** l'unité de commande (12) émet un signal d'erreur, si
- un des abonnés (16-22) comporte une valeur numérique qui est égale à une valeur numérique initiale, ou
- aucun des abonnés (16-22) comporte une valeur numérique qui corresponde à un des cycles d'attribution d'adresses exécutés, ou
- au moins deux abonnés (16-22) comportent la même valeur numérique.

4. Procédé selon l'une des revendications 1 à 3, **caractérisé en ce que**, au cas d'une erreur reconnue lors de la vérification de vraisemblance, l'attribution d'adresses est exécutée pour tous les abonnés ou seulement pour l'abonné respectif pour lequel une erreur a été reconnue.

5. Procédé d'attribution d'adresses en série dans un système de bus présentant un bus auquel une unité de commande et plusieurs abonnés à adresser sont connectés, procédé dans lequel
- l'unité de commande (12) assigne une adresse à un abonné (16-22) à adresser dans un cycle d'attribution d'adresses respectif, où l'unité de commande (12) émet un signal de départ au début de chaque cycle d'attribution d'adresses, et
- chaque abonné (16-22) restant encore à adresser détecte le nombre de signaux de départ reçus jusqu'à son adressage et enregistre, dans le cycle d'attribution d'adresses au cours duquel une adresse lui est assignée par l'unité de commande (12), une valeur numérique correspondant au nombre de signaux de départ reçus jusque-là, **caractérisé en ce que**, pour vérifier l'attribution d'adresses dans le système de bus, l'unité de commande (12) vérifie dans un cycle d'attribution d'adresses si la valeur numérique de l'abonné (16-22) à adresser dans ce cycle d'attribution d'adresses correspond au nombre des cycles d'attribution d'adresses exécutés jusque-là, et émet un signal d'erreur, si cela n'est pas le cas.

6. Procédé selon l'une des revendications 1 à 5, **caractérisé en ce que** l'unité de commande (12) attribue des adresses représentant des valeurs montantes ou descendantes aux abonnés (16-22) connectés successivement au bus.

7. Procédé selon l'une des revendications 1 à 6, **caractérisé en ce que** l'unité de commande attribue les adresses aux abonnés en commençant avec l'abonné connecté au bus le plus loin ou le plus proche du point de vue de l'unité de commande.
